# EUROPÄISCHE PATENTSCHRIFT

(11) **EP 1 889 666 B1**
(45) Veröffentlichungstag und Bekanntmachung des Hinweises auf die Patenterteilung: **03.12.2008**
(21) Anmeldenummer: 07013863.1
(22) Anmeldetag: 16.07.2007
(51) Int. Cl.: B05B 12/14, B05B 13/04

(54) **Vorrichtung zum Beschichten, insbesondere zum Lackieren, von Gegenständen, insbesondere von Fahrzeugkarosserien**
Device for coating, in particular painting, objects, in particular vehicle bodywork
Dispositif destiné à recouvrir, en particulier pur laquer, des objets, en particulier de véhicules automobiles

(30) Priorität: 17.08.2006 DE 102006038562
(43) Veröffentlichungstag der Anmeldung: 20.02.2008
(73) Patentinhaber: EISENMANN Lacktechnik GmbH & Co. KG, 71032 Böblingen (DE)
(72) Erfinder: Albrecht, Markus, 74232 Abstatt (DE); Kubach, Erhard, 74239 Kochersteinfeld (DE)
(74) Vertreter: Ostertag, Ulrich

(56) Entgegenhaltungen:
- WO-A1-20/04037436

## Beschreibung

Die Erfindung betrifft eine Vorrichtung zum Beschichten, insbesondere zum Lackieren, von Gegenständen, insbesondere von Fahrzeugkarosserien, mit
a) mindestens einer Applikationseinrichtung;
b) mindestens einem mehrachsigen, die Applikationseinrichtung tragenden Roboter;
c) mindestens einem entlang einer Führungsstruktur verfahrbaren, den Roboter tragenden Schlitten;
d) mindestens einer Führungskette, die eine Mehrzahl von elektrischen und/oder optischen und/oder fluidischen Leitungen trägt, die sich ihrerseits zwischen einem ortsfesten Anschlußpunkt und einem mit dem Schlitten mitgeführten Anschlußpunkt erstrecken;
e) mindestens einer mit dem Schlitten mit geführten Wechseleinrichtung für Beschichtungsmaterial, die eingangsseitig mit einer Mehrzahl von Versorgungsquellen für Beschichtungsmaterial und ausgangsseitig mit der Applikationseinrichtung in Verbindung steht und eine entsprechende Mehrzahl von steuerbaren Ventilen aufweist;
f) einer Wechseleinrichtungs-Steuerung, welche von einer Zentralsteuerung ansteuerbar ist und von welcher sich eine Mehrzahl von Steuerleitungen zu der Wechseleinrichtung erstreckt;
   wobei
g) durch die Wechseleinrichtungs-Steuerung zur Steuerung der Wechseleinrichtung wahlweise eine oder mehrere der Steuerleitungen mit einem Steuersignal beaufschlagbar sind.

Derartige Beschichtungsvorrichtungen werden insbesondere zum Lackieren von Fahrzeugkarosserien, aber auch zum sonstigen Beschichten auch anderer Gegenstände, eingesetzt. Siehe Dokument WO 2004/037436. Der mehrachsige Roboter führt die Applikationseinrichtung, insbesondere eine Spritzglocke, und kann aufgrund seiner Mehrachsigkeit der Kontur des zu beschichtenden Gegenstandes genau folgen.

Bei Lackieranlagen kommt es häufig vor, daß für die Beschichtung eines Gegenstandes ein anderer Lack verwendet werden soll als derjenige Lack, mit welchem ein vorhergehender Gegenstand lackiert wurde. Dies bedeutet, daß der der Spritzglocke zugeführte Lack gewechselt werden muß. Für diesen Zweck haben sich Farbwechseleinrichtungen etabliert, wie sie an und für sich bekannt sind. Einer solchen Farbwechseleinrichtung werden eingangsseitig über mehrere Zuführleitungen, beispielsweise Farbschläuche, unterschiedliche Lacke aus entsprechenden Reservoirs zugeführt. Von diesen unterschiedlichen Lacken wird jedoch ausgangsseitig immer nur ein bestimmter Lack stromabwärts zur Spritzglocke weitergeleitet, indem die Farbwechseleinrichtung mittels einer Farbwechseleinrichtungs-Steuerung in geeigneter Weise angesteuert wird. Die Farbwechseleinrichtung umfaßt hierfür üblicherweise eine der Zahl der Farbzuleitungen entsprechende Anzahl von druckluftbetätigten Ventilen, zu deren Ansteuerung wiederum eine entsprechende Anzahl von Steuerleitungen in Form von Druckluftleitungen, beispielsweise Druckluftschläuchen, erforderlich ist. Diese sind an ihrem einen Ende mit der Farbwechseleinrichtung und an ihrem anderen Ende mit der Farbwechseleinrichtungs-Steuerung verbunden.

Zwischen der Farbwechseleinrichtung und der Spritzglocke verläuft ein Verbindungsschlauch, über den der ausgewählte Lack zur Spritzglocke gefördert wird. Bei einem Farbwechsel von einem ersten zu einem zweiten Lack wird der erste Lack zunächst mittels Druckluft aus diesem Verbindungsschlauch herausgedrückt, welcher dann mit einem Reinigungsmittel gereinigt wird. Dieser Vorgang eines Farbwechsels ist an und für sich bekannt, wobei die Applikationseinrichtung während des Reingungsvorganges stillsteht. Erst wenn der Verbindungsschlauch vollständig von dem ersten Lack befreit und gespült ist, wird er von der Farbwechseleinrichtung mit dem zweiten Lack beschickt.

Sowohl die Farbwechseleinrichtung als auch die Farbwechseleinrichtungs-Steuerung sind bei bekannten Beschichtungsvorrichtungen entfernt von der Beschichtungsvorrichtung, und zwar stromauf der Führungskette, an einer stationären Stelle angeordnet. Dies bedeutet, daß Beschichtungsmaterial über eine recht lange Strecke zwischen der Farbwechseleinrichtung und der Spritzglocke, die in der Regel mehrere 10 Meter beträgt, gefördert werden muß. Daher kann es bei einem Farbwechsel verhältnismäßig lange dauern, bis der zweite Lack, wenn er nach dem oben erwähnten Reinigungsvorgang durch die Verbindungsleitung gefördert wird, zur Lackspritzpistole gelangt. Dadurch kommt es bei jedem Farbwechsel zu unerwünschten, über die Dauer des Reinigungsvorganges hinausgehende Verzögerungen, die auf der Laufzeit des Lackes zwischen Farbwechseleinrichtung und Spritzglocke beruhen und jeweils zu einer entsprechenden Stillstandphase der Applikationseinrichtung führen. Dieser bei jedem Farbwechsel auftretende Stillstand der Applikationseinrichtung schlägt sich wiederum negativ auf den möglichen Durchsatz der Beschichtungsvorrichtung nieder.

Die Farbwechseleinrichtungs-Steuerung ist in der Regel in möglichst großer Nähe zur Farbwechseleinrichtung angeordnet, um eine andere Verzögerungsart weitgehend zu minimieren: Erfolgt die Steuerung zumindest der Ventile nämlich wie oben angesprochen mittels Druckluft über Druckluftleitungen, kommt es stets zu einer Schaltverzögerung von etwa 1 Millisekunde pro Längenmeter der Druckluftleitung. Das heißt, zwischen dem Zeitpunkt, an dem die Farbwechseleinrichtungs-Steuerung eine Druckluftleitung mit Druckluft beaufschlagt, und dem tatsächlichen Schaltzeitpunkt des druckluftbetätigten Ventils vergeht stets eine von der Länge der Druckluftleitung abhängige Zeitspanne. Folglich sind diese Schaltverzögerungen umso kürzer, je kürzer die zwischen Farbwechseleinrichtung und Farbwechseleinrichtungs-Steuerung verlaufenden Steuerleitungen sind. Abhängig von ihrer Dauer können die Verzögerungen bei den Schaltzeitpunkten der druckluftbetätigten Ventile zu unbefriedigenden Ergebnissen führen.

Die verfahrbaren Komponenten der Beschichtungsvorrichtung, wozu insbesondere der Roboter und der den Roboter tragende Schlitten zählen, müssen über eine Mehrzahl von Leitungen mit elektrischer Energie, Steuersignalen und/oder fluiden Medien versorgt und/oder beaufschlagt werden, wozu wiederum entsprechend viele Zuführleitungen bzw. Steuerleitungen notwendig sind, welche jeweils zu den zugehörigen Komponenten führen.

Neben den Steuerleitungen, die von der Farbwechseleinrichtungs-Steuerung zur Farbwechseleinrichtung führen, sind bei Vorrichtungen der eingangs genannten Art noch weitere Versorgungs- und Steuerleitungen vorhanden, die zum Roboter, zur Applikationseinrichtung und/oder zu sonstigen Komponenten der Beschichtungsvorrichtung führen.

Insgesamt steigt die Anzahl der zu dem Roboter führenden und von diesem mitgeführten Leitungen mit zunehmender Komplexität der Beschichtungsvorrichtung. Diese Leitungen werden von einer Medienführungskette geordnet gehalten, an der die einzelnen Leitungen derart befestigt sind, daß sie sich bei der Bewegung des Schlittens in eine ordentliche Schleife legen. Die Breite der Medienführungskette steigt mit zunehmender Anzahl von Leitungen, was sich in einer entsprechenden Verbreiterung der Gesamtabmessungen der Vorrichtung niederschlägt.

Aufgabe der vorliegenden Erfindung ist es, eine Vorrichtung der eingangs genannten Art so auszugestalten, daß die Verzögerungen verringert sind, die auf der Laufzeit des Beschichtungsmaterials von der Wechseleinrichtung zur Applikationseinrichtung beruhen. Gleichzeitig soll dem Wunsch nach einer weitgehenden Minimierung von Schaltverzögerungen und möglichst geringen Gesamtabmessungen der Beschichtungsvorrichung Rechnung getragen werden.

Diese Aufgabe wird dadurch gelöst, daß bei einer Vorrichtung der eingangs genannten Art

### h) die Wechseleinrichtungs-Steuerung mit dem Schlitten mitgeführt ist.

Dadurch, daß im Gegensatz zu bekannten Beschichtungsvorrichtungen die Wechseleinrichtung mit dem Schlitten mitgeführt ist, ist der Abstand zwischen Wechseleinrichtung und Applikationseinrichtung verringert. Bei ansonsten gleicher Fließgeschwindigkeit ist damit auch die Laufzeit, die Beschichtungsmaterial benötigt, um von der Wechseleinrichtung zur Applikationseinrichtung zu gelangen, reduziert.

Gleichzeitig ist, da auch die Wechseleinrichtungs-Steuerung mit dem Schlitten mitgeführt ist, die Anzahl der von der Führungskette mitzuführenden Leitungen verringert. Bliebe die Wechseleinrichtungs-Steuerung nämlich wie beim Stand der Technik stromaufwärts von der Führungskette angeordnet, müssten alle Steuerleitungen, die zwischen der Wechseleinrichtungs-Steuerung und der Wechseleinrichtung verlaufen, von der Führungskette mitgeführt werden. Nunmehr müssen im Zusammenhang mit der Wechseleinrichtung nur diejenigen wenigen zur Wechseleinrichtungs-Steuerung führenden Leitungen von der Führungskette getragen werden, welche zum Betrieb und zur Ansteuerung der Wechseleinrichtungs-Steuerung unentbehrlich sind.

Auch die Länge der Steuerleitungen zwischen Wechseleinrichtungs-Steuerung und Wechseleinrichtung ist geringer als sie es im Falle einer entfernt von der Beschichtungsvorrichtung angeordneten Wechseleinrichtungs-Steuerung wäre.
So bleiben auch die diesbezüglichen Schaltverzögerungszeiten bei der Erfindung kurz.

Ferner können die von der Wechseleinrichtungs-Steuerung ausgehenden und zur Wechseleinrichtung auf dem Roboter, die relativ zur Wechseleinrichtungs-Steuerung unbeweglich ist, führenden Steuerleitungen im wesentlichen als starre Leitungen ausgebildet sein.

Es ist insbesondere günstig, wenn es sich bei den Steuerleitungen um Druckluftleitungen handelt und die Steuereinrichtung eine Druckluftsteuerung umfaßt, mittels der eine oder mehrere Druckluftleitungen mit Druckluft als Steuersignal beaufschlagbar sind. In diesem Fall können alle Druckluftleitungen, die üblicherweise bei stromaufwärts der Führungskette angeordneter Wechseleinrichtungs-Steuerung von der Führungskette mitgeführt werden müssten, durch eine einzige Druckluftzuführleitung ersetzt werden, die zu der Wechseleinrichtungs-Steuerung und der von dieser umfaßten Druckluftsteuerung führt.

Es ist vorteilhaft, wenn die Wechseleinrichtungs-Steuerung über einen Datenbus ansteuerbar ist, der mit der Zentralsteuerung kommuniziert.

Aus sicherheitstechnischer Sicht ist es günstig, wenn die Wechseleinrichtungs-Steuerung mittels eines optoelektronischen Wandlers mit Steuersignalen beaufschlagbar ist, in den über einen Lichtleiter Licht einstrahlbar ist.

Um den Abstand zwischen Wechseleinrichtung und Applikationseinrichtung und damit die Laufzeitverzögerung so gering wie möglich zu gestalten, ist es günstig, wenn die Wechseleinrichtung auf dem Roboter angeordnet ist. Um gleichzeitig die Schaltverzögerungen weitgehend zu minimieren, ist dann auch die Wechseleinrichtungs-Steuerung auf dem Roboter angeordnet. Insbesondere ist es in diesem Zusammenhang vorteilhaft, wenn die Wechseleinrichtung in räumlicher Nähe zur Applikationseinrichtung angeordnet ist und die Wechseleinrichtungs-Steuerung in räumlicher Nähe zur Wechseleinrichtung angeordnet sind. Unter räumlicher Nähe ist hier zu verstehen, daß die Komponenten grundsätzlich - im Rahmen von vernünftigen Spielräumen, die durchaus mehrere, auch mehr als 10 oder 20 Zentimeter umfassen können - so nah wie baulich möglich und praktisch sinnvoll zueinander angeordnet sind. Auf diese Weise ist der Abstand zwischen der Wechseleinrichtung und der Applikationseinrichtung so weit wie möglich verringert, was die Laufzeitverzögerung des Beschichtungsmaterials auf einen niedrigen Wert reduziert. Aufgrund des ebenfalls so weit wie möglich verringerten Abstandes zwischen Wechseleinrichtung und Wechseleinrichtungs-Steuerung ist auch die Länge der Steuerleitungen dazwischen auf ein geringes Maß gebracht. So ist es möglich, die eingangs erläuterten Verzögerungen in den Schaltzeiten weitgehend zu minimieren.

Hierfür beträgt die Länge der Steuerleitungen zwischen Wechseleinrichtungs-Steuerung und Wechseleinrichtung vorzugsweise maximal 300 cm.

Ein Ausführungsbeispiel der Erfindung wird nachstehend anhand der Zeichnung näher erläutert. In dieser zeigen:
- Figur 1: eine Lackiervorrichtung mit einem eine Applikationseinrichtung, eine Farbwechseleinrichtung und eine Farbwechseleinrichtungs-Steuerung tragenden Roboter;
- Figur 2: eine Ansicht der Lackiervorrichtung von Figur 1 aus der Richtung des dortigen Pfeiles A; und
- Figur 3: schematisch ein Blockschaltbild der Farbwechseleinrichtungs-Steuerung.

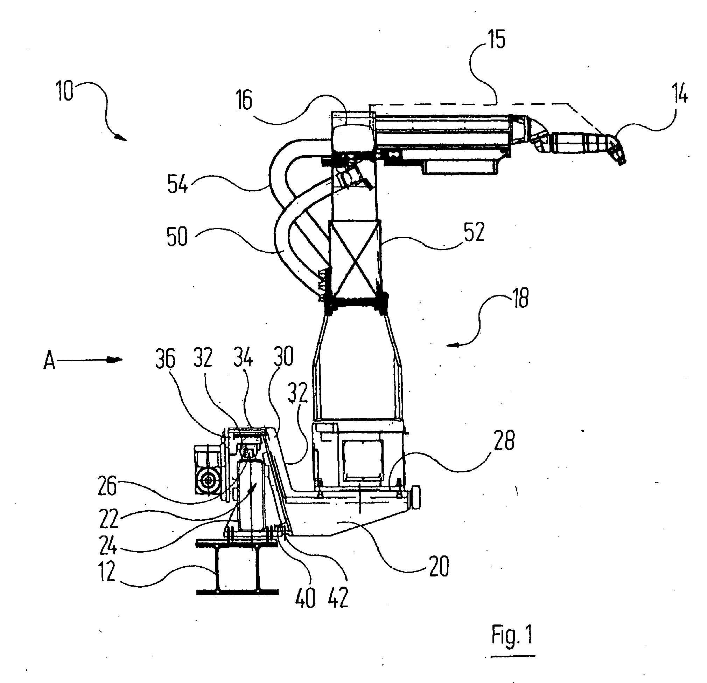

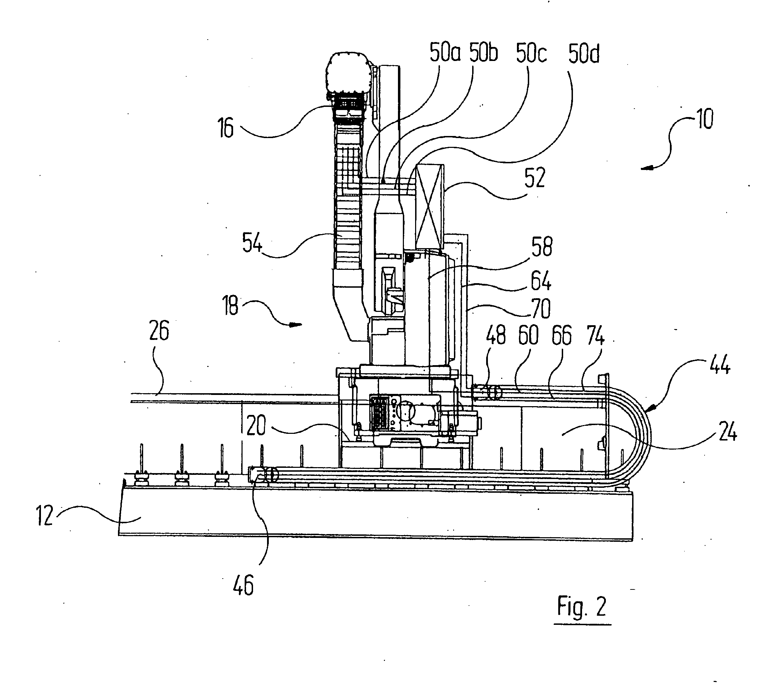

In den Figuren 1 und 2 ist eine insgesamt mit 10 bezeichnete Lackiervorrichtung gezeigt, wie sie zum Lackieren von in den Figuren nicht gezeigten Fahrzeugkarosserien eingesetzt wird. Ein Stahlträger 12 ist Bestandteil einer hier nicht näher interessierenden Lackspritzkabine, durch welche die Fahrzeugkarosserien in einer Richtung senkrecht zur Zeichenebene der Figur 1 mittels eines nicht gezeigten Fördersystems kontinuierlich oder intermittierend hindurchbewegt werden.

Die Fahrzeugkarosserien werden mit Hilfe einer Applikationseinrichtung 14 lackiert, welche hier als Spritzglocke 14 dargestellt ist. Sie wird über eine in Figur 1 als gestrichelte Linie angedeutete Verbindungsleitung 15 aus einer an und für sich bekannten Farbwechseleinrichtung 16 mit Lack gespeist. Die Spritzglocke 14 wird von einem sechsachsigen, insgesamt mit dem Bezugszeichen 18 versehenen Roboter geführt. Der Roboter 18 ist seinerseits auf einem Schlitten 20 montiert, welcher entlang einer Führungsstruktur 22 senkrecht zur Zeichenebene der Figur 1 verfahrbar ist ("7. Achse"). Die Führungsstruktur 22 umfaßt ein lastaufnehmendes Hohlprofil 24 mit rechteckigem Querschnitt, auf dessen in Figur 1 oberer Schmalseite eine Führungsschiene 26 angeschweißt ist.

Der Schlitten 20 umfaßt einen Tisch 28, auf welchem der Roboter 18 montiert ist. Ein Ausleger 30 ist mit dem Tisch 28 verbunden und derart geformt, daß er die Führungsstruktur 22 von der Seite und von oben her übergreift. Dazu hat der Ausleger 30 einen im wesentlichen U-förmigen Querschnitt und weist einen vom Tisch 28 ausgehenden, in Figur 1 schräg nach oben verlaufenden Seitenschenkel 32, einen sich daran anschließenden im wesentlichen horizontal verlaufenden Basisschenkel 34 sowie einen daran angeformten, im wesentlichen vertikal nach unten verlaufenden Seitenschenkel 36 auf. An der der Führungsstruktur 22 zugewandten Innenseite des horizontalen Schenkels 34 des Auslegers 30 ist eine zur Führungsschiene 26 komplementäre Gegenschiene 38 angeschweißt, über die der Schlitten 20 mit dem Roboter 18 reibungsarm verschiebbar ist.

Auf der dem Roboter 18 zugewandten Seite des Hohlprofils 24 ist benachbart dazu eine parallel zum Hohlprofil 24 verlaufende Laufschiene 40 vorgesehen, welche den Schlitten 20 abstützt. Hierfür weist der Schlitten 20 seitlich im unteren Bereich des schrägen Schenkels 32 des Auslegers 30 angeordnete Rollen 42 auf, welche um eine im wesentlichen vertikale Achse drehbar gelagert sind. Mit diesen Rollen 42 läuft der Schlitten 20 auf einer vom Hohlprofil 24 wegweisenden vertikalen Lauffläche ab. Auf diese Weise ist ein Verkippen des Schlittens 20 in Richtung des Pfeiles A in Figur 1 verhindert.

In Figur 2 ist eine Führungskette 44 zu erkennen, auf deren Darstellung in Figur 1 der Übersichtlichkeit halber verzichtet wurde. Die Führungskette 44 trägt verschiedene flexible elektrische und fluidische Leitungen, welche entsprechend zu elektrischen und pneumatischen Steuerungen, Ventilen, elektrischen Verbrauchern und Versorgungsanschlüssen der Beschichtungsvorrichtung 10 führen und die hier nicht im Einzelnen dargestellt sind. Die von der Führungskette 44 gehaltenen Leitungen versorgen die an und für sich bekannten verschiedenen Komponenten, die zum Betrieb des Schlittens 20, des Roboters 18 sowie der Farbwechseleinrichtung 16 und der Spritzglocke 14 notwendig sind, die hier jedoch nicht weiter interessieren. Die Führungskette 44 selbst dient dazu, die von ihr getragenen Leitungen geordnet zu halten, also dazu, ein Verwickeln und/oder Verwinden der Leitungen umeinander zu verhindern.

Die Führungskette 44 verläuft zwischen einem ortsfesten Anschlußpunkt 46 und einem von dem Schlitten 20 mitgeführten Anschlußpunkt 48. An dem ortsfesten Anschlußpunkt 46 sind die flexiblen und von der Führungskette 44 geordnet gehaltenen Leitungen mit ortsfesten und gegebenenfalls starren, entsprechenden elektrischen oder fluidischen Leitungen verbunden, die wiederum zu jeweiligen externen Quellen führen. In entsprechender Weise sind die flexiblen, von der Führungskette 44 geordnet gehaltenen Leitungen an dem vom Schlitten 20 mitgeführten Anschlußpunkt 48 mit entsprechenden Leitungen verbunden, die zu den mit dem Schlitten 20 mitgeführten Verbrauchern von elektrischer Energie oder elektrischen Signalen bzw. von fluidischen Medien führen. Dabei kann es sich sowohl um elektrische Ströme und Signale oder Fluide handeln, die der Bewegung des Schlittens 20 dienen, als auch um solche, die für die Bewegung des Roboters 18 sowie für die Speisung und Ansteuerung der Farbwechseleinrichtung 16 und damit der Spritzglocke 14 erforderlich sind. All dies ist an und für sich bekannt, weshalb diesbezügliche weitere Einzelheiten der Übersichtlichkeit halber in den Figuren nicht gezeigt sind und nicht näher beschrieben werden.

Zur Ansteuerung der Farbwechseleinrichtung 16 kann diese bis zu 50 und mehr druckluftbetätigte Ventile umfassen, welche hier nicht extra dargestellt sind. Jedes dieser Ventile ist über eine separate Druckluftleitung mit Druckluft beaufschlagbar, wodurch eine gezielte Steuerung der Farbwechseleinrichtung 16 möglich ist. Von den dazu jeweils mit einem Ventil verbundenen Druckluftleitungen sind in Figur 2 exemplarisch vier Druckluftleitungen 50a, 50b, 50c, 50d als fluidische Steuerleitungen dargestellt. Die Druckluftleitungen 50a, 50b, 50c, 50d münden in einem explosionsgeschützten Steuerschrank 52, der auf dem Roboter 18 montiert ist. Die in Figur 2 einzeln dargestellten Druckluftleitungen 50a, 50b, 50c und 50d sind in Figur 1 als Steuerleitungsbündel gezeigt, welches dort insgesamt mit dem Bezugszeichen 50 versehen ist. Sowohl in Figur 1 als auch in Figur 2 ist ferner ein Versorgungsleitungsbündel 54 zu erkennen, welches z.B. Versorgungsleitungen zur Zuführung von Farbe und zur Zuführung von Lösemitteln umfaßt. Die einzelnen Versorgungsleitungen des Versorgungsleitungsbündels 54 sind an dem vom Schlitten 20 mitgeführten Anschlußpunkt 48 jeweils mit entsprechenden von der Führungskette 44 geordnet gehaltenen flexiblen Versorgungsleitungen verbunden. Letztere wiederum sind über den ortsfesten Anschlußpunkt 46 mit entsprechenden Materialquellen, wie Lackreservoirs, verbunden und können mittels üblicher Pumpen mit Lack beschickt werden.

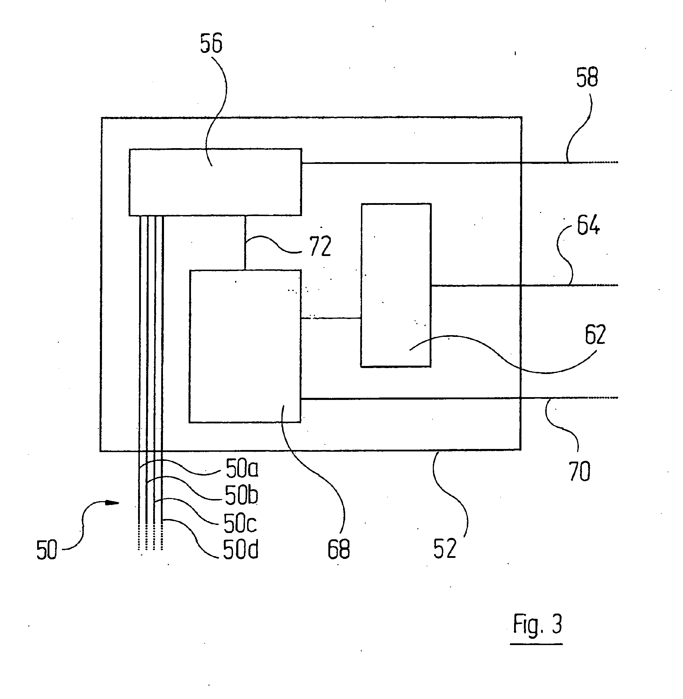

In Figur 3 sind die in dem Schaltschrank 52 untergebrachten Komponenten schematisch gezeigt. Die Druckluftleitungen 50a, 50b, 50c und 50d sind mit einer Druckluftsteuerung 56 verbunden, welche je nach Ansteuerung ausgewählt Druckluft auf die Druckluftleitungen 50a, 50b, 50c und 50d verteilt. Die zu verteilende Druckluft entstammt einer zentralen Druckluftzuführleitung 58, die mit ihrem einen Ende mit der Druckluftsteuerung 56 verbunden ist und die an ihrem anderen Ende an dem vom Schlitten 20 mitgeführten Anschlußpunkt 48 mit einer entsprechenden, von der Führungskette 44 geordnet gehaltenen flexiblen Druckluftzuführleitung 60 verbunden ist. Diese wiederum wird über den ortsfesten Anschlußpunkt 56 aus einer Druckluftquelle mit Druckluft beaufschlagt, so daß an der Druckluftsteuerung 56 Druckluft mit einem Druck anliegt, der bei etwa 10 bar liegt, der jedoch bis zu etwa 25 bar betragen kann.

Der Schaltschrank 52 wird stets unter einem Überdruck gehalten, so daß der Schaltschrank 52 explosionsgeschützt ausgebildet ist. Auf Grund des in ihm herrschenden Überdruckes können keine Lack-/Lösungsmitteldämpfe ins Innere des Schaltschranks 52 gelangen. Daher kann die Beschichtungsvorrichtung 10 auch bei Lacken eingesetzt werden, die brennbare und/oder explosionsfähige Gemische bildende Lösungsmittel enthalten.

Die Druckluftsteuerung 56 wird über einen Datenbus 62 angesteuert, welcher über eine Datenleitung 64 mit einer externen, hier nicht dargestellten Zentralsteuerung in Form eines Computers und/oder einer speicherprogrammierten Steuerung kommuniziert. Dazu ist die Datenleitung 62 an dem vom Schlitten 20 mitgeführten Anschlußßpunkt 48 mit einer entsprechenden, von der Führungskette 44 geordnet gehaltenen flexiblen Datenleitung 66 verbunden, welche ihrerseits über den ortsfesten Anschlußpunkt 46 mit der externen Zentralsteuerung in Verbindung steht. Der Datenbus 62 ist zur Steuerung der Druckluftsteuerung 56 seinerseits mit einem innerhalb des Steuerschranks 52 vorgesehenen optoelektronischen Wandler 68 verbunden. Dieser wandelt in an und für sich bekannter Weise Lichtenergie in elektrische Steuersignale um. Dazu wird in den optoelektronischen Wandler 68 über einen Lichtleiter 70 Licht einer geeigneten Wellenlänge eingestrahlt. Die von dem optoelektronischen Wandler 68 erzeugten elektrischen Steuersignale werden der Druckluftsteuerung 56 über eine Leitung 72 zugeführt. Der Lichtleiter 70 ist an dem vom Schlitten 20 mitgeführten Anschlußpunkt 48 mit einem entsprechenden, von der Führungskette 44 geordnet gehaltenem Lichtleiter 74 verbunden, der über den ortsfesten Anschlußpunkt 46 mit einer hier nicht gezeigten, an und für sich bekannten Lichtquelle in Kontakt steht.

Insgesamt verlaufen zwischen dem Steuerschrank 52 und dem von dem Schlitten 20 mitgeführten Anschlußpunkt 48 also drei Leitungen, nämlich die zentrale Druckluftzuführleitung 58, die Datenleitung 64 und der Lichtleiter 70. Drei jeweils dazu gleichartige Leitungen 60, 66, 74 werden von der Führungskette 44 geordnet gehalten. Von der Druckluftsteuerung 56 geht dagegen ein Druckluftleitungsbündel 50 mit einer Vielzahl von Druckluftleitungen, hier beispielhaft mit den Druckluftleitungen 50a, 50b, 50c und 50d, zur Farbwechseleinrichtung 16 ab. Die Anzahl von Einzelleitungen hängt, wie gesagt, davon ab, wieviele druckluftbetätigte Ventile zur Ansteuerung der Farbwechseleinrichtung 16 vorgesehen sind. Ohne den zwischen dem vom Schlitten 20 mitgeführten Anschlußpunkt 48 und der Farbwechseleinrichtung 16 vorgesehenen Schaltschrank 52 mit der Druckluftsteuerung 56 würde die Gesamtzahl der von der Führungskette 44 geordnet gehaltenen, zur Ansteuerung der Farbwechseleinrichtung 16 erforderlichen Druckluftleitungen der Anzahl der Ventile entsprechen.

Natürlich trägt die Führungskette 44 neben den gerade genannten Leitungen 60, 66 und 74 noch weitere verschiedene flexible elektrische Leitungen sowie Druckluftleitungen, die zum Betrieb der Beschichtungsvorrichtung 10 im allgemeinen und des Schlittens 20, des Roboters 18, der Farbwechseleinrichtung 16 und der Applikationseinrichtung 14 im besonderen erforderlich sind. Die grundsätzliche Ansteuerung der Beschichtungsvorrichtung ist an und für sich bekannt, weshalb hier nicht weiter darauf oder auf die dazu nötigen Versorgungs-/Steuerleitungen eingegangen wird.

Die Farbwechseleinrichtung 16 ist in größtmöglicher Nähe zur Spritzglocke 14 angeordnet, um die Laufzeit des Lackes zwischen diesen Komponenten so gering wie möglich zu halten, welche von der Länge der Verbindungsleitung 15 zwischen Farbwechseleinrichtung 16 und Spritzglocke 14 abhängt. Je näher die Farbwechseleinrichtung 16 zur Spritzglocke 14 benachbart angeordnet ist, desto kürzer kann die Verbindungsleitung 15 zwischen diesen ausgebildet sein und desto kürzer ist folglich die Laufzeit des Beschichtungsmaterials. Dabei hängt der geringstmögliche Abstand zwischen Farbwechseleinrichtung 16 und der Spritzglocke 14 von den baulichen Gegebenheiten der Beschichtungsvorrichtung 10 und insbesondere des Roboters 18 ab. Beim hier gezeigten Ausführungbeispiel sitzt die Farbwechseleinrichtung 16 an der ausgehend von der Spritzglocke 14 fünften Bewegungsachse des Roboters 18, gleichermaßen an dessen "Schultergelenk".

Gleichzeitig ist der Schaltschrank 52 in größtmöglicher Nähe zur Farbwechseleinrichtung 16 angeordnet, und zwar aus folgenden bereits eingangs angesprochenen Gründen: Bei einem Druckluftschlauch, der eine Druckluftsteuerung mit beispielsweise einem druckluftbetätgten Ventil verbindet, kommt es zu einer Schaltverzögerung von etwa 1 Millisekunde pro Längenmeter des Druckluftschlauchs. Dies bedeutet, daß bei einem Druckluftschlauch von 20 Metern Länge 20 Millisekunden zwischen dem Zeitpunkt, an dem die Druckluftsteuerung den Druckluftschlauch mit Druckluft beaufschlagt, und dem tatsächlichen Schaltzeitpunkt des Ventils vergehen. Der Ist-Schaltzeitpunkt des Ventils unterscheidet sich also um diese Verzögerungszeit von seinem Soll-Schaltzeitpunkt.

Je näher der Schaltschrank 52 also zur Farbwechseleinrichtung 16 benachbart auf dem Roboter 18 angeordnet ist, desto kürzer können die Steuerleitungen 50 zwischen der Druckluftsteuerung 56 und der Farbwechseleinrichtung 16 sein, und desto kürzer sind folglich die Verzögerungszeiten zwischen Ist-Schaltzeitpunkt und Soll-Schaltzeitpunkt. Insgesamt ist auf diese Weise eine zeitlich genauere Steuerung der Ventile möglich.

Eine hinnehmbare Schaltverzögerung tritt beispielsweise auf, wenn die Druckluftleitungen 50a, 50b, 50c und 50d zwischen dem Schaltschrank 52 und der Farbwechseleinrichtung 16 eine Länge haben, die 300 cm nicht übersteigt.

## Patentansprüche

1. Vorrichtung zum Beschichten, insbesondere zum Lackieren, von Gegenständen, insbesondere von Fahrzeugkarosserien, mit
a) mindestens einer Applikationseinrichtung (14);
b) mindestens einem mehrachsigen, die Applikationseinrichtung (14) tragenden Roboter (18);
c) mindestens einem entlang einer Führungsstruktur (22) verfahrbaren, den Roboter (18) tragenden Schlitten (20);
d) mindestens einer Führungskette (44), die eine Mehrzahl von elektrischen und/oder optischen und/oder fluidischen Leitungen (60, 66, 74) trägt, die sich ihrerseits zwischen einem ortsfesten Anschlußpunkt (46) und einem mit dem Schlitten (20) mitgeführten Anschlußpunkt (48) erstrecken;
e) mindestens einer mit dem Schlitten (20) mitgeführten Wechseleinrichtung (16) für Beschichtungsmaterial, die eingangsseitig mit einer Mehrzahl von Versorgungsquellen für Beschichtungsmaterial und ausgangsseitig mit der Applikationseinrichtung (14) in Verbindung steht und eine entsprechende Mehrzahl von steuerbaren Ventilen aufweist;
f) einer Wechseleinrichtungs-Steuerung (52), welche von einer Zentralsteuerung ansteuerbar ist und von welcher sich eine Mehrzahl von Steuerleitungen (50a, 50b, 50c, 50d) zu der Wechseleinrichtung (16) erstreckt;
wobei
g) durch die Wechseleinrichtungs-Steuerung (52) zur Steuerung der Wechseleinrichtung (16) wahlweise eine oder mehrere der Steuerleitungen (50a, 50b, 50c, 50d) mit einem Steuersignal beaufschlagbar sind,
**dadurch gekennzeichnet, daß**
h) die Wechseleinrichtungs-Steuerung (52) mit dem Schlitten (20) mitgeführt ist.

2. Vorrichtung nach Anspruch 1, **dadurch gekennzeichnet,**
**daß** es sich bei den Steuerleitungen (50a, 50b, 50c, 50d) um Druckluftleitungen (50a, 50b, 50c, 50d) handelt und die Wechseleinrichtungs-Steuerung (52) eine Druckluftsteuerung (56) umfaßt, mittels der eine oder mehrere Druckluftleitungen (50a, 50b, 50c, 50d) mit Druckluft als Steuersignal beaufschlagbar sind.

3. Vorrichtung nach Anspruch 1 oder 2, **dadurch gekennzeichnet, daß** die Wechseleinrichtungs-Steuerung (52) über einen Datenbus (62) ansteuerbar ist, welcher mit der Zentralsteuerung kommuniziert.

4. Vorrichtung nach einem der Ansprüche 1 bis 3, **dadurch gekennzeichnet, daß** die Wechseleinrichtungs-Steuerung (52) mittels eines optoelektronischen Wandlers (68) mit Steuersignalen beaufschlagbar ist, in den über einen Lichtleiter (70) Licht einstrahlbar ist.

5. Vorrichtung nach einem der Ansprüche 1 bis 4, **dadurch**
**gekennzeichnet, daß** die Wechseleinrichtung (16) und die Wechseleinrichtungs-Steuerung (52) auf dem Roboter (18) angeordnet sind.

6. Vorrichtung nach einem der Ansprüche 1 bis 5, **dadurch**
**gekennzeichnet, daß** die Wechseleinrichtung (16) in räumlicher Nähe zur Applikationseinrichtung (14) angeordnet ist und die Wechseleinrichtungs-Steuerung (52) in räumlicher Nähe zur Wechseleinrichtung (16) angeordnet ist.

7. Vorrichtung nach Anspruch 6, **dadurch gekennzeichnet,**
**daß** die Steuerleitungen (50a, 50b, 50c, 50d) zwischen der Wechseleinrichtungs-Steuerung (52) und der Wechseleinrichtung (16) ein Länge von maximal 300 cm aufweisen.

## Claims

1. An apparatus for coating, in particular for painting, objects, in particular vehicle bodies having
a) at least one application device (14);
b) at least one multiaxial robot (18) carrying the application device (14);
c) at least one carriage (20) which is displaceable along a guide structure (22) and carries the robot (18);
d) at least one guide chain (44) which carries a plurality of electrical and/or optical and/or fluidic lines (60, 66, 74), which in turn extend between a stationary connection point (46) and a connection point (48) carried with the carriage (20);
e) at least one change-over device (16) for coating material carried with the carriage (20), which change-over device is connected on the input side with a plurality of supply sources for coating material and on the output side with the application device (14) and comprises a corresponding plurality of controllable valves;
f) a change-over device controller (52), which is drivable by a central controller and from which a plurality of control lines (50a, 50b, 50c, 50d) extend to the change-over device (16);
wherein
g) a control signal may be applied as desired to one or more of the control lines (50a, 50b, 50c, 50d) by the change-over device controller (52) in order to control the change-over device (16),
**characterised in that**
h) the change-over device controller (52) is carried with the carriage (20).

2. An apparatus according to claim 1, **characterised in that** the control lines (50a, 50b, 50c, 50d) are compressed air lines (50a, 50b, 50c, 50d) and the change-over device controller (52) is a compressed air controller (56), by means of which compressed air may be applied as the control signal to the one or more compressed air lines (50a, 50b, 50c, 50d).

3. An apparatus according to claim 1 or claim 2, **characterised in that** the change-over device controller (52) is drivable via a data bus (62) which communicates with the central controller.

4. An apparatus according to any one of claims 1 to 3, **characterised in that** control signals may be applied to the change-over device controller (52) by means of an optoelectronic transducer (68) into which light may be directed via a light guide (70).

5. An apparatus according to any one of claims 1 to 4, **characterised in that** the change-over device (16) and the change-over device controller (52) are arranged on the robot (18).

6. An apparatus according to any one of claims 1 to 5, **characterised in that** the change-over device (16) is arranged in the spatial vicinity of the application device (14) and the change-over device controller (52) is arranged in the spatial vicinity of the change-over device (16).

7. An apparatus according to claim 6, **characterised in that** the control lines (50a, 50b, 50c, 50d) between the change-over device controller (52) and the change-over device (16) have a length of at most 300 cm.

## Revendications

1. Dispositif de revêtement, notamment de laquage, de vernissage ou de peinture d'objets, en particulier de carrosseries de véhicules, comprenant
a) au moins un dispositif ou système applicateur (14) ;
b) au moins un robot (18) à axes multiples, portant ledit système applicateur (14) ;
c) au moins un chariot (20) portant ledit robot (18) et mobile le long d'une structure de guidage (22) ;
d) au moins une chaîne de guidage (44) portant une pluralité de conducteurs ou conduits (60, 66, 74) électriques et/ou optiques et/ou de circulation de fluides, qui s'étendent à leur tour entre un point fixe de raccordement (46) et un point de raccordement (48) entraîné conjointement au chariot (20) ;
e) au moins un système (16) de variation ou d'échange de matériau de revêtement, qui est entraîné conjointement au chariot (20), est en liaison, côté entrée, avec une pluralité de sources d'alimentation en matériau de revêtement et, côté sortie, avec le système applicateur (14), et comporte une pluralité correspondante de vannes commandables ;
f) une commande (52) du système de variation ou d'échange, qui peut être activée par un pilotage centralisé, et dont une pluralité de conduits de commande (50a, 50b, 50c, 5 ou) partent en direction dudit système de variation (16) ;
sachant
g) qu'un ou plusieurs desdits conduits de commande (50a, 50b, 50c, 50d) peu(ven)t être sélectivement sollicité(s) par un signal de commande, sous l'action de la commande (52) affectée au pilotage du système de variation ou d'échange (16),
**caractérisé par le fait que**
h) la commande (52) du système de variation ou d'échange est entraînée conjointement au chariot (20).

2. Dispositif selon la revendication 1, **caractérisé par le fait que** les conduits de commande (50a, 50b, 50c, 50d) se présentent comme des conduits (50a, 50b, 50c, 50d) à air comprimé, et la commande (52) du système de variation englobe une commande (56) d'air comprimé au moyen de laquelle un ou plusieurs conduit(s) (50a, 50b, 50c, 50d) à air comprimé peu(ven)t être sollicité(s) par de l'air comprimé, en tant que signal de commande.

3. Dispositif selon la revendication 1 ou 2, **caractérisé par le fait que** la commande (52) du système de variation peut être activée par l'intermédiaire d'un bus de données (62) en communication avec le pilotage centralisé.

4. Dispositif selon l'une des revendications 1 à 3, **caractérisé par le fait que** la commande (52) du système de variation peut être sollicitée, par des signaux de commande, au moyen d'un convertisseur optoélectronique (68) dans lequel de la lumière peut être induite par l'intermédiaire d'un guide de lumière (70).

5. Dispositif selon l'une des revendications 1 à 4, **caractérisé par le fait que** le système de variation (16) et la commande (52) dudit système de variation se trouvent disposés sur le robot (18).

6. Dispositif selon l'une des revendications 1 à 5, **caractérisé par le fait que** le système de variation (16) se trouve à proximité spatiale du système applicateur (14), et que la commande (52) dudit système de variation se trouve à proximité spatiale dudit système de variation (16).

7. Dispositif selon la revendication 6, **caractérisé par le fait que** les conduits de commande (50a, 50b, 50c, 50d) présentent une longueur de 300 cm, au maximum, entre la commande (52) du système de variation et ledit système de variation (16).
